# EUROPÄISCHE PATENTSCHRIFT

(11) **EP 1 366 132 B1**
(45) Veröffentlichungstag und Bekanntmachung des Hinweises auf die Patenterteilung: **26.08.2009**
(21) Anmeldenummer: 02700220.3
(22) Anmeldetag: 09.02.2002
(51) Int. Cl.: C09J 175/04, C08G 18/36

(54) **ZWEIKOMPONENTIGER POLYURETHAN-KLEBSTOFF FÜR HOLZWERKSTOFFE**
TWO-COMPONENT POLYURETHANE ADHESIVE FOR WOODEN MATERIALS
ADHESIF POLYURETHANNE A DEUX COMPOSANTS POUR MATERIAUX A BASE DE BOIS

(30) Priorität: 19.02.2001 DE 10108025
(43) Veröffentlichungstag der Anmeldung: 03.12.2003
(73) Patentinhaber: Henkel AG & Co. KGaA, 40589 Düsseldorf (DE)
(72) Erfinder: THIELE, Lothar, 40764 Langenfeld (DE); GRÜNEWÄLDER, Bernhard, 40721 Hilden (DE); POEL, Andre, Te, 47877 Willich (DE); KOHLSTADT, Hans-Peter, 42549 Velbert (DE)
(86) Internationale Anmeldenummer: PCT/EP2002/001370
(87) Internationale Veröffentlichungsnummer: WO 2002/066572

(56) Entgegenhaltungen:
- DE-A- 4 401 572
- DE-A- 19 546 451
- FOCK J ET AL: "ZWEIKOMPONENTIGE POLYURETHANKLEBSTOFFE" ADHASION, BERTELSMANN FACHZEITSCHRIFTEN GMBH. BERLIN, DE, Bd. 33, Nr. 1/2, 1989, Seiten 15-20,23-26, XP000052714

## Beschreibung

Die Erfindung betrifft einen zweikomponentigen Polyurethan-Klebstoff auf der Basis
A) eines Polyolgemisches,
B) mindestens eines Polyisocyanates und
C) von gegebenenfalls Hilfsstoffen
sowie seine Verwendung zum Verkleben von Holz und Holzwerkstoffen.

Derartige Polyurethan-Klebstoffe sind bekannt. So werden in der DE 44 01 572 A1 zweikomponentige Polyurethan-Klebstoffe auf der Basis einer Isocyanat-Komponente und einer Polyol-Komponente beschrieben, welche neben einem oleochemischen Polyol 2 bis 7 Gewichtsprozent, bezogen auf das oleochemische Polyol, mindestens eines di- und/oder trifunktionellen Alkohols enthält und wobei die Hydroxylzahl der Alkohole oder deren Gemische 1 100 bis 1 850 beträgt. Diese Zusammensetzungen können zum Verkleben von starren oder flexiblen Substraten verwendet werden, insbesondere von Kunststoffen, Metallen, Glas oder besonders bevorzugt von Holz sowohl für Kombinationen dieser Substrate untereinander als auch für Verklebungen dieser Substrate mit sich selbst. Die Holzverklebungen erfüllen die Norm EN 205 "Beurteilung von Klebstoffen für nichttragende Bauteile zur Verbindung von Holz und Holzwerkstoffen", und zwar nicht nur die Anforderungen der Beanspruchungsgruppe D3, sondern teilweise auch die der D4. Dazu wurde die Holzverklebung 7 Tage bei Normalklima (20 °C/65 % relative Luftfeuchte), 6 Stunden in kochendem Wasser und 2 Stunden in Wasser mit einer Temperatur von 20 °C gelagert. Danach betrug die Zugscherfestigkeit in einem der 3 Beispiele noch 4,5 N/mm². Zur Erfüllung der Norm wird ein Wert von mehr als 4 N/mm² gefordert. Demnach wird durch die bekannte Erfindung die Anforderung an D4-Materialien vereinzelt gerade noch erfüllt. Der bekannte Klebstoff eignet sich zwar sehr gut für nicht tragende HolzBauteile, nicht dagegen für tragende.

Es sind auch Polyurethan-Klebstoffe für tragende Holzbauteile bekannt. So wird in der DE 44 12 759 A1 ein Einkomponenten-Polyurethan-Klebstoff beschrieben, der sich durch einen Gehalt an
a) 50 bis 95 Gew.% eines Isocyanat-haltigen Polyurethan-Prepolymeren,
b) 2 bis 8 Gew.-% eines hydrophoben Siliciumdioxids und
c) 2 bis 6 Gew.-% eines pulverförmigen Molekularsiebes sowie gegebenenfalls durch weitere übliche Zusatzstoffe und/oder Beschleuniger auszeichnet. Die Mindestpreßzeit bis zum Erreichen der Anfangshaftung beträgt 9 Stunden. Die Endfestigkeit war nach 2 bis 3 Tagen erreicht. Es wurden keine Versuche vorgelegt, die die Eignung für tragende Bauteile bestätigen, insbesondere wurden keine Zugversuche nach einer Kochendwasserbehandlung beschrieben. Weitere Nachteile sind die lange Preßzeit. Mit Einkomponenten-Polyurethan-Klebstoffen sind prinzipiell nicht die kurzen Preßzeiten zweikomponentiger Klebstoffe auf Polyurethanbasis zu erreichen.

Aus diesem Stand der Technik ergibt sich die Aufgabe, einen Klebstoff für tragende Bauteile aus Holz oder Holzwerkstoffen bereitzustellen, der sich in Handhabung, Lagerung und Anwendung wie ein Zweikomponenten-Polyurethan-Klebstoff verhält, in seinen klebetechnischen Eigenschaften aber den Anforderungen für tragende Bauteile erfüllt. Insbesondere sollte die Zugscherfestigkeit nach 24 Stunden in kochendem Wasser und nach einer Trocknung bei 60 °C in 7 Tagen noch über 8, insbesondere über 11 MPa liegen und dabei um weniger als 40, insbesondere weniger als 20 % abnehmen.

Die erfindungsgemäße Lösung ist den Patentansprüchen zu entnehmen. Sie liegt in erster Linie in der Verwendung eines Harzes, welches in dem Polyol-Gemisch homogen gelöst ist.
Gegenstand der Erfindung ist also ein
zweikomponentiger Polyurethan-Klebstoff für Holzwerkstoffe auf der Basis
A) eines Polyolgemisches, enthaltend zumindest
   a) 10 bis 98, insbesondere 20 bis 95 Gew.-% mindestens eines oleochemischen Polyols,
   b) 1 bis 7,5, insbesondere 2 bis 5 Gew.% mindestens eines Diols mit einer Hydroxylzahl von 400 bis 2 000, insbesondere von 500 bis 1800 und
   c) 1 bis 7,5, insbesondere 2 bis 5 Gew.% mindestens eines drei- oder höherfunktionellen, insbesondere eines drei-, vier- oder fünffunktionellen Polyols mit einer Hydroxylzahl von 200 bis 2 000, insbesondere von 400 bis 1850, jeweils bezogen auf das Polyol-Gemisch insgesamt, und
B) mindestens eines Polyisocyanates, wobei das NCO/OH-Verhältnis der Komponenten A) und B) im Bereich von 1,5 bis 0,9, insbesondere von 1,3 bis 0,9 liegt, sowie
C) 0 bis 85, insbesondere 10 bis 70 Gew.%, bezogen auf den Klebstoff insgesamt, mindestens eines Hilfsstoffes,
dadurch gekennzeichnet, daß das Polyol-Gemisch 10 bis 60, insbesondere 10 bis 50 Gew.%, bezogen auf das Polyol-Gemisch insgesamt, ein darin homogen gelöstes Harz enthält.

"Auf der Basis von" heißt, daß es sich bei den Komponenten A (Polyolgemisch) und B (Polyisocyanate) um wesentliche Bestandteile des Klebstoffes handelt, die gegebenenfalls durch die Hilfsstoffe C modifiziert werden können. Allerdings ist auch das Polyolgemisch A alleine Gegenstand der Erfindung, da es sowohl mit Isocyanaten als auch mit Epoxiden ausgehärtet werden kann. Bevorzugt ist die Reaktion mit Polyisocyanaten.

Unter "oleochemischen Polyolen" versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind.

Eine Untergruppe dieser Verbindungen sind die Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidation der Doppelbindungen aus einer Reihe von Fetten und Ölen herstellbar, z.B. Rindertalg, Palmöl, Erdnußöl, Rüböl, Baumwollsaatöl, Sojaöl, Sonnenblumenöl und Leinöl. Besonders bevorzugte epoxidierte Triglyceride sind epoxidiertes Sojaöl und epoxidiertes Leinöl.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethanol, 1,2-Propandiol, 1,3-Propandiol, 1,4-Butandiol. 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Die Ringöffnungsreaktion epoxidierter Fettsäureester oder Triglyceride mit einem Alkohol kann gegebenenfalls von einer Umesterung mit sich selber oder anderen, nachträglich zugefügten Triglyceriden, wie zum Beispiel Palmöl, Erdnußöl, Rüböl, Baumwollsaatöl, Sojaöl, Sonnenblumenöl und Leinöl, gefolgt sein. Solche oleochemischen Polyole sind z.B. in der deutschen Patentanmeldung DE-A1 41 28 649 beschrieben.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykofen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus dem Reaktionsgleichgewicht durchgeführt werden kann. Bevorzugt sind Ringöffnungs- und Umesterungsprodukte, bei denen ein molares Verhältnis zwischen epoxidiertem Fettsäureester und dem zur Umsetzung verwendeten Alkohol von 1 : 1 bis 1 : 10 angewandt worden ist.

Ebenfalls zu den oleochemischen Polyolen zählen die Umsetzungsprodukte epoxidierter Fettalkohole mit C₂-C₈-Alkoholen der Funktionalität 1 bis 10, insbesondere 2 bis 4, im molaren Verhältnis der Epoxidgruppen zu den Hydroxylgruppen von 1 : 1 bis 1 : 10.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden, wie z.B. Palmöl, Erdnußöl, Rüböl, Baumwollsaatöl, Sojaöl, Sonnenblumenöl und Leinöl, zugänglich sind.

Ebenso können Polyole verwendet werden, die nach der Lehre der DE-A1 41 24 665 durch die Umesterung von polymerisiertem Glycerin mit den vorstehend genannten Triglyceride erhältlich sind. Die Polyole können Hydroxylzahlen von 50 bis 400, bevorzugt 100 bis 300 aufweisen.

Besonders bevorzugt ist die Verwendung von Rizinusöl und Dimerdiolen der Fa. Henkel KGaA als oleochemische Polyole sowie die Polyesterpolyole, die durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Unter "mindestens einem Diol mit einer Hydroxylzahl von 400 bis 2 000" ist sowohl ein Diol als auch ein Diolgemisch mit Hydroxylzahlen in diesem Bereich zu verstehen. Dabei ist es nicht erforderlich, daß die einzelnen Bestandteile des Gemisches jeweils Hydroxylzahlen im genannten Bereich aufweisen, vielmehr ist auch der Einsatz eines Gemisches aus Diolen möglich, bei denen die einzelnen Hydroxylzahlen außerhalb des beanspruchten Bereiches liegen. Zu der Gruppe der Diole zählen insbesondere Alkandiole mit 2 bis 6 C-Atomen, wobei das Alkan linear, verzweigt oder cyclisch sein kann. Beispielsweise sind 1,2-Propandiol, 1,3-Propandiol, 2,3-Butandiol oder 2,4-Butandiol sowie Diglykol und Dipropylenglykol brauchbar, insbesondere 1,4-Butandiol, Dipropylenglykol und Diglykol.

Unter "drei- oder höherfunktionellen Polyolen" sind sowohl einzelne Verbindungen als auch deren Gemisch gemeint. Auch hier soll das Polyolgemisch die angegebene Hydroxylzahl von 200 bis 2 000 erfüllen, das einzelne höherfirnktionelle Polyol kann auch außerhalb dieses Bereiches liegen. Besonders bevorzugt sind Polyole mit 3, 4 oder 5 OH-Gruppen wie Glycerin, Triethanolamin, Pentaerythrit, propoxyliertes oder ethoxyliertes Ethylendiamin. Brauchbar sind aber auch Trimethylolpropan, Trimethylolethan oder Additionsprodukte von einem Mol Ethylenoxid an Glycerin. Insbesondere sind bevorzugt Polyole mit 4 OH-Gruppen (Tetraole).

Außer diesen niedermolekularen Diolen und höherfunktionellen Polyolen können auch die für die PU-Herstellung üblichen höhermolekularen Polyole in einer Menge von 0 bis 70, insbesondere 0 bis 50 Gew.%, bezogen auf die Polyol-Komponente insgesamt, eingesetzt werden. Als höhermolekulare Polyole eignen sich vorzugsweise flüssige Polyhydroxyverbindungen insbesondere mit zwei bzw. drei Hydroxylgruppen pro Polyether- und/oder Polyester-Molekül, wie z.B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eigesetzt werden. Eine weitere Gruppe von vorzugsweise einzusetzenden Polyetherpolyolen sind die Polytetramethylenglykole, die z.B. durch die saure Polymerisation von Tetrahydrofuran hergestellt werden. Dabei liegt der Molekulargewichtsbereich der Polytetramethylenglykole zwischen 200 und 6000, vorzugsweise im Bereich von 400 bis 4000.
Weiterhin sind als Polyole die flüssigen Polyester geeignet, die durch Kondensation von Di- bzw. Tricarbonsäuren, wie z.B. Adipinsäure, Sebazinsäure und Glutarsäure, mit niedermolekularen Diolen bzw. Triolen, wie z.B. Etylenglykol, Propylenglykol, Diethylenglykol, Triethylenglykol, Dipropylenglykol, 1,4-Butandiol, 1,6-Hexandiol, Glyzerin oder Trimethylolpropan, hergestellt werden können. Eine weitere Gruppe der fakultativ einzusetzenden Polyole sind die Polyester auf der Basis von ε-Caprolacton, auch "Polycaprolactone" genannt sowie Polycarbonatpolyole.

Die Polyisocyanate sind mehrfunktionell. Vorzugsweise enthalten die geeigneten mehrfunktionellen Isocyanate im Mittel 2 bis höchstens 5, vorzugsweise bis 4 und insbesondere 2 oder 3 NCO-Gruppen. Beispielsweise seien als geeignete Isocyanate genannt Phenylisocyanat, 1,5-Naphthylendiisocyanat, 4,4'-Diphenylmethandiisocyanat (MDI), hydriertes MDI (H₁₂MDI), Xylylendiisocyanat (XDI), m- und p-Tetramethylxylylendilsocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toiuytendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Polyisocyanate mit rekationsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thioglykol oder Dihydroxydihexylsulfid. Weitere wichtige Diisocyanate sind Trimethylhexamethylendiisocyanat, 1,4-Diisocyanatbutan, 1,12-Diisocyanatododecan und Dimerfettsäurediisocyanat.

Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalamid, Caprolactam partiell oder vollständig umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure. Vorzugsweise besteht die Isocyanatkomponente a) zu mehr als 30 Gew.%, insbesondere zumindest überwiegend, vorzugsweise vollständig, aus aromatischen Isocyanaten wie MDI.

Im allgemeinen werden aromatische Isocyanate bevorzugt, ebenso oligomerisierte NCO-endständige Addukte aus den oben genannten Isocyanaten und Polyolen, Polyaminen oder Aminoalkoholen. Jedoch vermögen - wider Erwarten - auch aliphatische und cycloaliphatische Isocyanate schon bei Raumtemperatur schnell und vollständig zu reagieren.

Interesse verdienen teilweise verkappte Polyisocyanate, welche die Bildung selbstvernetzender Polyurethane ermöglichen, z.B. dimeres Toluylen-diisocyanat. Schließlich können auch Prepolymere eingesetzt werden, also Oligomere mit mehreren Isocyanatgruppen. Sie werden bekanntlich bei einem großen Überschuß von monomerem Polyisocyanant in Gegenwart von z.B. Diolen erhalten. Auch Isocyanuratisatisierungsprodukte des HDI und Biuretisierungsprodukte des HDI sind möglich.

Als Di- oder Polyisocyanate werden vorzugsweise die aromatischen Isocyanate verwendet, z.B. Diphenylmethandiisocyanat, entweder in Form der reinen Isomeren, als Isomerengemisch der 2,4'-/4,4'-Isomeren oder auch das mit Carbodiimid verflüssigte Diphenylmethandiisocyanat (MDI), das z.B. unter dem Handelsnamen Isonate 143 L bekannt ist, sowie das sogenannte "Roh-MDI", d.h., die Isomeren/Oligomerenmischung des MDI, wie sie z.B. unter dem Handelsnamen PAPI bzw. Desmodur VK im Handel erhältlich sind. Weiterhin können sogenannte "Quasi -Prepolymere", d.h. Umsetzungsprodukte des MDI bzw. des Toluylendiisocyanates (TDI) mit niedermolekularen Diolen, wie z.B. Ethylenglykol, Diethyenglykol, Propylenglykol, Dipropylenglykol oder Triethylenglykol, verwendet werden. Bevorzugt sind aliphatische, cycloaliphatische oder aromatische Isocyanate mit einer Funktionalität von 2 bis 4.

Das Verhältnis der in der Isocyanatkomponente enthaltenen Isocyanatgruppen zu den in der Polyolkomponenten enthaltenen OH-Gruppen liegt in der Regel im Bereich der Äquivalenz, wobei im Hinblick auf das im Holz vorhandene Wasser ein geringer Überschuß an Isocyanat-Gruppen zweckmäßig ist.

Die erfindungsgemäßen Zweikomponenten-Polyurethan-Klebstoffe können weiterhin Hilfsstoffe enthalten, die vorzugsweise ganz oder teilweise der Polyolkomponente zugemischt werden. Darunter werden Stoffe verstanden, die in der Regel (außer Füllstoffe) in kleinen Mengen zugesetzt werden, um die Eigenschaften der wesentlichen Komponenten in gewünschter Richtung zu verändern, z.B. deren Verarbeitbarkeit, Lagerfähigkeit und auch Gebrauchseigenschaften dem konkreten Anwendungsgebiet anzupassen. Brauchbare Hilfsstoffe können sein: Füllstoffe, Verlaufmittel, Entlüfter, Thixotropiermittel, Katalysatoren, Alterungsschutzmittel, Farbstoffe, Trockenmittel, Flammschutzmittel, Lösungsmittel und Netzmittel.
Als Füllstoffe geeignet sind gegenüber Isocyanaten nicht reaktive anorganische Verbindungen wie Kreide, beschichtete Kreide, Kalkmehl, Calcium-Magnesium-Carbonate, Aluminiumoxide und -hydroxide, gefällte Kieselsäure, Zeolithe, Bentonite, Glas, Hohlkugeln, gemahlene Mineralien sowie andere dem auf dem Arbeitsgebiet tätigen Fachmann bekannte anorganische Füllstoffe. Bevorzugte Füllstoffe sind Kreide, modifiziert oder unmodifiziert.
Das Verlaufmittel soll das Verlaufen des Klebstoffs beim Auftrag fördern, d.h. seine Fähigkeit, beim Auftragen entstehende Unebenheiten, Streifen, Blasen, Krater usw. auszugleichen. Als Verlaufmittel eigenen sich nicht reaktive Verbindungen wie Glykolether, Silikonöle, Acrylatcopolymere, Ester, Ketone und Terpen-Lösungsmittel mittlerer bis hoher Verdunstungszahl. Bevorzugte Verlaufmittel sind: Perenol F 3 und Perenol F 40 (Polyacrylat), Perenol S 4 (modifiziertes Polysiloxan), Perenol S 43 (Polysiloxan-Copolymer) und BYK-S 706 (Polyacrylat). Eine ähnliche Wirkung haben die sogenannten Entlüfter, wobei folgende Produkte bevorzug sind: Perenol E1 (Polyvinylderivat), Perenol E 7 (organisches Polymer mit Silikonspitze), Perenol E 8 (Lösemittelgemisch mit Silikonanteil), Perenol F 40 (Lösemittelgemisch mit Silikonanteil), Perenol F 45 (Copolyacrylat) und BYK-A-Typen (modifizierte Polysiloxane, teilweise in Mischung mit anderen Polymeren).

Die erfindungsgemäßen Zweikomponenten-Polyurethan-Klebstoffe können auch Katalysatoren enthalten, die die Reaktion der OH-Gruppe mit den NCO-Gruppen beschleunigen, vor allem metallorganische Verbindungen wie Zinn(II)salze von Carbonsäuren, starke Basen wie Alkali-Hydroxide, -Alkoholate und -Phenolate, z.B. Di-n-octyl-Zinn-mercaptid, Dibutylzinn-maleat, -diacetat, -dilaurat, -dichlorid, - bisdodecyl-mercaptid, Zinn-II-acetat, -ethylhexoat und -diethylhexoat oder Bleiphenyl-ethyl-dithiocarbaminat. Als Trimerisierungs-Katalysator sei DABCO TMR-2 usw. der Fa. Air Products genannt, wobei es sich um in Ethylglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin.

Die Katalysatoren können auch in oligomerisierter oder polymerisierter Form vorliegen, z.B. als Stickstoff-methyliertes Polyethylenimin.

Kennzeichnungsgemäß wird dem Polyol-Gemisch ein Harz zugesetzt. Dabei handelt es sich um flüssige bis feste organische Produkte, für die eine mehr oder weniger breite Verteilung der relativen Molmasse charakteristisch ist (siehe DIN 55958). Sie weisen meistens eine amorphe Struktur auf und brechen als Folge ihrer recht niedrigen Molmasse und verhältnismäßig hohen Glastemperatur in der Regel muschelartig (siehe Römpp Chemie-Lexikon, Stichwort "Harze"). Erfindungsgemäß müssen diese Harze bei 20 °C in den beanspruchten Bereichen mit der Polyol-Komponente homogene, d.h. schlierenfreie Lösungen bilden. Makroskopisch liegt also eine einzige Phase vor. Es findet auch keine Entmischung bei 20 °C innerhalb eines Monats, vorzugsweise innerhalb von 6 Monaten statt. Unter diesen Voraussetzungen können alle Harze verwendet werden, seien sie natürlichen oder synthetischen Ursprungs.
Die natürlichen Harze können sowohl pflanzlicher als auch tierischer Herkunft sein. Konkret seien folgende rezente Harze genannt: Schellack und Kolophonium, sei es z.B. in Form von Tallharzen, Balsamharzen oder Wurzelharzen. Nicht nur die nativen natürlichen Harze, sondern vor allem deren Derivate sind brauchbar, sei es, daß sie durch Disproportionierung, Dimerisierung, Hydrierung, Polymersation, Veresterung, Salzbildung oder durch Addition ungesättigter Verbindungen, z.B. von Maleinsäure erhältlich sind. Bevorzugte natürliche Harze sind Schellack- und Balsam/Kolophoniumharze sowie deren Derivate.

Die synthetischen Harze werden im allgemeinen durch Polymerisation oder Polykondensation gewonnen. Sie haben charakteristischerweise keinen scharfen Schmelz- oder Erweichungspunkt. Konkret seien genannt: Kohlenwasserstoff-, Terpen-, Cumaron/Inden-, Furan-, Alkyd-, Aldehyd-, Keton-, Phenol-, Glycerinester-, Polyester-, Epoxid-, Harnstoff-, Melamin-, Polyamid- und Isocyanat-Harze. Davon sind bevorzugt Kohlenwasserstoff-, Terpen-, Alkyd-, Cumaron/Inden-, Furan-, Aldehyd- und Keton-Harz sowie Glycerin-Harz-Ester.

Zur Herstellung des beanspruchten zweikomponentigen Polyurethan-Klebstoffes wird zunächst die Polyolkomponente hergestellt. Dazu wird zunächst eine homogene Lösung des Harzes in einer bzw. in allen Polyolen hergestellt, indem man gegebenenfalls die Mischung unter Rühren bis auf 100 °C aufwärmt. Anschließend werden die Hilfsstoffe zugemischt. Die Hilfsstoffe können auch ganz oder teilweise der Isocyanat-Komponente zugemischt werden. Diese Zweikomponenten werden üblicherweise bis zu ihrer Anwendung zweikomponentig gelagert, d.h. bis zum Zeitpunkt der Anwendung werden die Polyol- und Isocyanat Komponente getrennt aufbewahrt. Zur Anwendung werden diese beiden Komponenten in an sich bekannter Weise miteinander gemischt und das Gemisch auf die zu verklebenden Substrate aufgetragen.

Die erfindungsgemäßen Polyurethan-Klebstoffe sind zum Verbinden einer Vielzahl an starren, insbesondere aber flexiblen Substraten geeignet. So können Kunststoffe, Metalle, Glas, Textilien und vor allem Holz und Holzwerkstoffe sowohl für Kombinationen dieser Substrate untereinander als auch für Verklebungen dieser Substrate mit sich selbst verbunden werden. Unter Holzwerkstoffen sind Werkstoffe zu verstehen, die vorwiegend aus Holz aufgebaut sind oder aus Holz bestehen. Zu unterscheiden sind Langholz (z.B. Schichtholz, Sperrholz, Sternholz, Fumierplatten und Vielschichtsperrholz), Holzverbundplatten (z.B. Stäbchen-, Stab-, Streifen- und Tischlerplatten), Holzfaserplatten, Holzspanplatten und Preßvollholz und Kunstharz-imprägniertes Vollholz. Insbesondere eignet sich der Klebstoff zum Verkleben von tragenden Bauteilen. Dazu werden sehr harte Hölzer wie Steineiche und Weißdorn sowie harte Hölzer wie Buche, Eiche, Ahorn, Nußbaum und mittelharte Hölzer wie Ulmen, Kastanien und auch weiche Hölzer wie Lärche, Birke, Fichte, Tanne und Erle verwendet.

Der Wassergehalt des Holzwerkstoffes ist in der Regel nicht kritisch. Er sollte vorzugsweise im Bereich von 2 bis 20 Gew.% liegen, insbesondere im Bereich von 4 bis 16 Gew.%.

Die Verklebung erfolgt in der Regel bei Raumtemperatur unter Druck innerhalb von max. 60 Minuten, vorzugsweise innerhalb von 30 Minuten.

Die Verklebungen zeichnen sich durch eine außergewöhnliche hohe Festigkeit sowie Beständigkeit der Festigkeit gegenüber Feuchteeinwirkung aus. Bei dem Kochendwassertest wird nicht nur die chemische Beständigkeit der Verklebung geprüft, sondern auch deren mechanische Beständigkeit, da sich das Holz beim Kochen und anschließendem Trocknen krümmen und verziehen möchte. Dabei treten erhebliche Spannungen auf, die im vorliegenden Fall eher zu Rissen in dem Holz als zu Rissen in der Klebschicht führten.

Die Erfindung wird nun im einzelnen erläutert.

### Beispiele

1. Ausgangsmaterialien
a) Rizinusöl,
b) Dipropylenglykol,
c) Voranol RA 640: ein Produkt aus Ethylendiamin und 4 Einheiten Propylenoxid der Fa. Dow Chemical,
d) Cyclohexanon/Formaldehyd-Harz der Fa. Degusssa-Hüls AG,
e) Keton/Formaldehyd-Harz der Fa. Degussa-Hüls AG,
f) UOP-L-Pulver: ein Kalium-Natrium-Aluminium-Silikat vom Typ Zeolith A der Fa. UOP GmbH,
g) Perenol-E-8: zur Entlüftung bzw. als Verlaufmittel ein Lösemittelgemisch mit Siliconanteil der Fa. Cognis Deutschland GmbH,
h) Calciumcarbonat als Füllstoff,
i) Aerosil R 202: ein amorphes hochdisperses hydrophobes Siliciumdioxid der Fa. Degussa-Hüls AG,
j) Desmodur VKS 20 F: ein 4,4'-Diphenylmethan-diisocyanat mit polymeren Anteilen der Fa. Bayer AG.

2. Herstellung des Klebstoffes
Zunächst wurde die Polyol-Komponente durch Mischen der Komponenten a) bis e) bei 100 °C in einem Rundkolben mit Rührer hergestellt, wobei die flüssigen Polyolkomponenten vorgelegt wurden.
Das Gemisch aus dem Harz und den Polyolen war schlierenfrei.
Die Ausgangsmaterialien wurden in folgenden Mengen zur Klebstoffherstellung eingesetzt:

| Beispiel | 1 | 2 | 3 | 4 |
|---|---|---|---|---|
| Ausgangsmaterial | (Angaben in Masse-%) | | | |
| **Polyolkomponente** | | | | |
| Rizinusöl | 54,6 | 49,9 | 40,0 | 40,0 |
| Voranol RA 640 | - | 2,5 | 2,5 | 2,5 |
| Dipropylenglykol | - | 3,3 | 3,3 | 3,3 |
| UOP-L-Pulver | 8,0 | 8,0 | 8,0 | 8,0 |
| Perenol E 8 | 0,2 | 0,2 | 0,2 | 0,2 |
| Calciumcarbonat-Füllstoff | 35,2 | 34,1 | 34,1 | 34,1 |
| Aerosil R 202 | 2,0 | 2,0 | 2,0 | 2,0 |
| Keton-Formaldehyd-Harz | - | - | 9,9 | - |
| Cyclohexanon-Formaldehyd-Harz | - | - | - | 9,9 |
| **Isocyanatkomponente** Desmodur VKS 20F | 24,4 | 34,3 | 35,7 | 32,1 |

3. Klebeeigenschaften
Für die anwendungstechnische Prüfung der Klebstoffe wurden Prüfkörper nach EN 205 mit den Klebstoffen der Beispiele 1 bis 4 aus 2,0 x 10 cm großen Buchenholz-Stäbchen mit 2,0 x 1,0 cm Überlappung verwendet. Die weiteren Bedingungen waren: Holz-Feuchtigkeit: 6 %, Klebstoff-Auftrag: 200 g/m², Raumklima: 20 °C / 65 % rel. Luftfeuchte, Preßdruck: 5 bar, Preßzeit: 20 Min., Lagerzeit zum Aushärten: 7 Tage bei Raumtemperatur (20 °C).
Es wurde die Zugscherfestigkeit vor und nach dem Kochendwassertest bestimmt. Der Kochendwassertest bestand darin, daß die Prüfkörper 24 Stunden in Wasser gekocht und dann in 7 Tagen bei 60 °C getrocknet wurden.
Die Ergebnisse sind in der folgenden Tabelle zusammengefaßt:

| Beispiel Zugscherfestigkeit in MPa | 1 | 2 | 3 | 4 |
|---|---|---|---|---|
| vor Kochwassertest | 5,3 | 10,0 | 13,0 | 12,9 |
| nach Kochwassertest | 2,2 | 4,8 | 12,4 | 12,0 |

Die Ergebnisse zeigen, daß die erfindungsgemäßen Beispiele 3 und 4 eine hohe Zugscherfestigkeit sowohl vor als auch nach dem Kochendwassertest haben. Das Beispiel 2 (entspricht der DE 44 01 572 A1) zeigt dagegen einen starken Abfall der Festigkeit von 10,0 auf 4,8 MPa.
Der Klebstoff fühlte sich weich an.
4. Meßmethoden:
a) OH-Zahl nach DIN 53240,
b) Prüfkörper-Herstellung nach EN 205.

## Patentansprüche

1. Zweikomponentiger Polyurethan-Klebstoff für Holzwerkstoffe auf der Basis
A) eines Polyolgemisches, enthaltend zumindest
a) 10 bis 98 Gew.-% mindestens eines oleochemischen Polyols,
b) 1 bis 7.5 Gew.-% mindestens eines Diols mit einer Hydroxylzahl von 400 bis 2 000 und
c) 1 bis 7.5 Gew.-% mindestens eines drei-, vier- oder fünffunktionellen Polyols mit einer Hydroxylzahl von 200 bis 2 000, wobei die Gew.-% jeweils auf das Polyol-Gemisch insgesamt bezogen sind, und
B) mindestens eines Polyisocyanates, wobei das NCO/OH-Verhältnis der Komponenten A) und B) im Bereich von 1,5 bis 0,9 liegt, sowie
C) 0 bis 85 Gew.-%, bezogen auf den Klebstoff insgesamt, mindestens eines Hilfsstoffes,
**dadurch gekennzeichnet, daß** das Polyol-Gemisch bis zu 60 Gew.-%, bezogen auf das Polyol-Gemisch insgesamt, ein darin homogen gelöstes Harz enthält

2. Klebstoff nach Anspruch 1, **dadurch gekennzeichnet, daß** das Harz ein natürliches Harz ist, vorzugsweise ein Balsam-Kolophonium- oder Schellack-Harz ist sowie deren Derivate.

3. Klebstoff nach Anspruch 1, **dadurch gekennzeichnet, daß** das Harz ein synthetisches Harz ist, vorzugsweise ein Kohlenwasserstoff-, Terpen-, Alkyd-, Furan-, Cumaron-Inden-, Aldehyd- oder ein Keton-Harz ist, bzw. ein Glycerin-Harz-Ester.

4. Klebstoff nach Anspruch 1, **dadurch gekennzeichnet, daß** das oleochemische Polyol zumindest ein Polyol aus der folgenden Gruppe ist Rizinusöl, Dimerdiole und durch Ringöffnung von epoxidierten Triglyzeriden eines olefinisch ungesättigten Fettgemisches mit Alkoholen hergestellten Polyols, insbesondere Rizinusöl.

5. Klebstoff nach Anspruch 1, **dadurch gekennzeichnet, daß** das Diol mindestens ein Diol aus der folgenden Gruppe der Alkandiole mit 2 bis 6 C-Atomen ist, insbesondere 1,4-Butandiol, Dipropylen-Glykol und Diglykol.

6. Klebstoff nach Anspruch 1, **dadurch gekennzeichnet, daß** das Polyol mit 3, 4 oder 5 OH-Gruppen mindestens ein Polyol aus der folgenden Gruppe ist, Glyzerin, Pentaerythrit, propoxyliertes oder ethoxyliertes Ethylendiamin, insbesondere ein Tetraol.

7. Klebstoff nach Anspruch 1, **dadurch gekennzeichnet, daß** das Polyisocyanat ein aliphatisches, cycloaliphatisches oder aromatisches Isocyanat mit einer Funktionalität von 2 bis 4 ist.

8. Klebstoff nach Anspruch 1 bis 7, **dadurch gekennzeichnet, daß** mindestens einer der folgenden Hilfsstoffe enthalten ist: Füllstoff, Katalysator, Verlaufsmittel, Entlüftungsmittel, insbesondere Füllstoffe.

9. Verwendung der Klebstoffe nach mindestens einem der Ansprüche 1 bis 8 zum Verkleben von Holzwerkstoffen, insbesondere von tragenden Holzbauteilen.

10. Verwendung nach Anspruch 9, **dadurch gekennzeichnet, daß** der Wassergehalt des Holzwerkstoffes beim Kleben 2 bis 20 Gew.-% ist.

## Claims

1. A two-component polyurethane adhesive for wooden materials based on
A) a polyol mixture containing at least
a) 10 to 98% by weight of at least one oleochemical polyol,
b) 1 to 7.5% by weight of at least one diol with a hydroxyl number from 400 to 2,000, and
c) 1 to 7-5% by weight of at least one tri-, tetra- or penta-functional polyol with a hydroxyl number from 200 to 2,000, the weight percentages being each based on the total polyol mixture, and
B) at least one polyisocyanate, the NCO/OH ratio of the components
A) and B) lying in the range from 1.5 to 0.9, as well as
C) 0 to 85% by weight of at least one adjuvant, based on the total adhesive,
**characterized in that** the polyol mixture contains up to 60% by weight of a resin homogenously dissolved therein, based on the total polyol mixture.

2. The adhesive according to claim 1, **characterized in that** the resin is a natural resin, preferably a balsam-rosin or shellac resin as well as derivatives thereof.

3. The adhesive according to claim 1, **characterized in that** the resin is a synthetic resin, preferably a hydrocarbon, terpene, alkyd, furane, coumarone-indene, aldehyde or ketone resin, or a glycerine resin ester.

4. The adhesive according to claim 1, **characterized in that** the oleochemical polyol is at least one polyol from the following group, castor oil, dimeric diols, and polyols prepared by ring opening of epoxidized triglycerides of an olefinically unsaturated fat mixture with alcohols, in particular castor oil.

5. The adhesive according to claim, **characterized in that** the diol is at least one diol from the following group of alkanediols with 2-6 C atoms, in particular 1,4-butanediol, dipropyl6neglycol and diglycol.

6. The adhesive according to claim 1, **characterized in that** the polyol with 3, 4 or 5 OH groups is at least one polyol from the following group, glycerol, pentaerythritol, propoxylated or ethoxylated ethylenediamine, in particular a tetraol.

7. The adhesive according to claim 1, **characterized in that** the polyisocyanate is an aliphatic, cycloaliphatic or aromatic isocyanate with a functionality from 2 to 4.

8. The adhesive according to claim 1 to 7, **characterized in that** at least one of the following adjuvants is contained: filler, catalyst, levelling agent, de-aerating agent, in particular fillers.

9. The use of the adhesives according to at least one of claims 1 to 8 for adhesively bonding wooden materials, in particular load-bearing wooden components.

10. The use according to claim 9, **characterized in that**, the water content of the wooden material is from 2 to 20% by weight during adhesive bonding.

## Revendications

1. Adhésif à base de polyuréthane à deux composants pour matériaux à base de bois, à base
A) d'un mélange de polyols, contenant au moins :
a) 10 à 98% en poids d'au moins un polyol oléochimique,
b) 1 à 7,5% en poids d'au moins un diol présentant un indice d'hydroxyle de 400 à 2000 et
c) 1 à 7,5% en poids d'au moins un polyol trifonctionnel, tétrafonctionnel ou pentafonctionnel présentant un indice d'hydroxyle de 200 à 2000, où les % en poids se rapportent à chaque fois à la totalité du mélange de polyols, et
B) d'au moins un polyisocyanate, le rapport NCO/OH des composants A) et B) étant situé dans la plage de 1,5 à 0,9, ainsi que
C) de 0 à 85% en poids, par rapport à la totalité de l'adhésif, d'au moins un adjuvant,
**caractérisé en ce que** le mélange de polyols contient, à raison de jusqu'à 60% en poids, par rapport à la totalité du mélange de polyols, une résine qui y est dissoute de manière homogène,

2. Adhésif selon la revendication 1, **caractérisé en ce que** la résine est une résine naturelle, de préférence une résine de colophonium de balsamine ou une résine de gomme laque (shellac) ainsi que leurs dérivés.

3. Adhésif selon la revendication 1, **caractérisé en ce que** la résine est une résine synthétique, de préférence une résine d'hydrocarbure, terpénique, alkyde, de furanne, de coumarone-indène, d'aldéhyde ou de cétone, ou un ester de résine glycérique.

4. Adhésif selon la revendication 1, **caractérisé en ce que** le polyol oléochimique est au moins un polyol du groupe suivant : huile de ricin, diols dimères et polyols préparés par ouverture de cycle de triglycérides époxydés d'un mélange gras oléfiniquement insaturé avec des alcools, en particulier l'huile de ricin.

5. Adhésif selon la revendication 1, **caractérisé en ce que** le diol est au moins un diol du groupe suivant des alcanediols comprenant 2 à 6 atomes de carbone, en particulier le 1,4-butanediol, le dipropylèneglycol et le diglycol.

6. Adhésif selon la revendication 1, **caractérisé en ce que** le polyol comprenant 3, 4 ou 5 groupes OH est au moins un polyol du groupe suivant : glycérol, pentaérythritol, éthylènediamine propoxylée ou éthoxylée, en particulier un tétrol.

7. Adhésif selon la revendication 1, **caractérisé en ce que** le polyisocyanate est un isocyanate aliphatique, cycloaliphatique ou aromatique présentant une fonctionnalité de 2 à 4.

8. Adhésif selon la revendication 1 à 7, **caractérisé en ce qu'**au moins un des adjuvants suivants est contenu charge, catalyseur, agent d'étalement, agent de désaération, en particulier des charges.

9. Utilisation des adhésifs selon au moins l'une quelconque des revendications 1 à 8 pour le collage de matériaux à base de bois, en particulier de pièces porteuses en bois.

10. Utilisation selon la revendication 9, **caractérisée en ce que** la teneur en eau du matériau à base de bois lors du collage est de 2 à 20% en poids.
